# EUROPÄISCHE PATENTANMELDUNG

(11) **EP 3 096 261 A1**
(43) Veröffentlichungstag der Anmeldung: **23.11.2016**
(21) Anmeldenummer: 15168612.8
(22) Anmeldetag: 21.05.2015
(51) Int. Cl.: G06K 9/00, G06T 17/05

(54) **VERFAHREN ZUR ERFASSUNG EINER BESTIMMTEN ART VON OBERFLÄCHENELEMENTEN EINER OBJEKTOBERFLÄCHE**

(71) Anmelder: Siemens AG Österreich, 1210 Wien (AT)
(72) Erfinder: Hödlmoser, Michael, 1180 Wien (AT); Rohrböck, Rainer, 2223 Martinsdorf (AT); Birchbauer, Josef Alois, 8054 Seiersberg (AT)
(74) Vertreter: Maier, Daniel Oliver

(57) **Zusammenfassung**

Die Erfindung betrifft ein Verfahren zur Erfassung einer bestimmten Art von Oberflächenelementen (2-9) einer Objektoberfläche (1), insbesondere einer Gebäudeoberfläche, wobei verschiedene zweidimensionale Bildaufnahmen (13, 14) der Objektoberfläche (1) in digitaler Form und ein digitales dreidimensionales Modell (15) der Objektoberfläche (1) vorhanden sind. Dabei werden mehrere Verfahrensschritten durchgeführt, nämlich ein Markieren von möglichen Oberflächenelementen in jeder zweidimensionalen Bildaufnahme (13, 14) mittels eines für die bestimmte Art von Oberflächenelementen (2-9) trainierten Detektors, ein Transferieren der Markierungsergebnisse (16-25) jeder zweidimensionalen Bildaufnahme (13, 14) in das dreidimensionale Modell (15) der Objektoberfläche (1) und ein Auswerten der transferierten Markierungsergebnisse (26-35) im dreidimensionalen Raum anhand zumindest eines festgelegten Abgleichkriteriums, um Oberflächenelemente (36-41) zu lokalisieren. Somit erfolgt die Erfassung von Oberflächenelementen (2-9) in zweidimensionalen Bildern (13, 14) in einfacher Weise unter Zuhilfenahme der dreidimensionalen Information aus dem Modell (15) der Objektoberfläche (1).

## Beschreibung

Die Erfindung betrifft ein Verfahren zur Erfassung einer bestimmten Art von Oberflächenelementen einer Objektoberfläche, insbesondere einer Gebäudeoberfläche, wobei verschiedene zweidimensionale Bildaufnahmen der Objektoberfläche in digitaler Form und ein digitales dreidimensionales Modell der Objektoberfläche vorhanden sind. Zudem betrifft die Erfindung ein entsprechendes Erfassungssystem.

Zur Optimierung von Planungs- und Steuerungsaufgaben oder von Herstellungsprozessen gewinnt die digitale Nachbildung realer Objekte zunehmend an Bedeutung. Für diverse Anwendungen sind insbesondere bestimmte Oberflächenelemente von Interesse.

Ein Beispiel ist die detailgetreue, semantische 3D-Rekonstruktion von Gebäuden und deren Fassaden. Diverse Anwendungen reichen von einfachen Visualisierungen bis hin zu thermischen Analysen ganzer Stadtteile. Ein geometrisch und semantisch realitätsnahes Abbild erlaubt unter Berücksichtigung von Materialeigenschaften die Berechnung energieverbundener Metriken.

Insbesondere die Erstellung semantischer 3D-Modelle von Gebäuden ist aufwendig, weil die Schlüsselelemente von Fassaden, nämlich Fester und Türen, eine hohe Intra-Klassen-Variabilität aufweisen (verschiedene Formen, Höhen, Breiten, Materialien, Farben etc.). Bekannte Verfahren nutzen deshalb aufwendige und besonders optimierte Detektionsalgorithmen.

Der Erfindung liegt die Aufgabe zugrunde, ein einfaches und zuverlässiges Verfahren der eingangs genannten Art anzugeben. Zudem soll ein entsprechendes Erfassungssystem beschrieben werden.

Erfindungsgemäß wird diese Aufgabe gelöst durch ein Verfahren gemäß Anspruch 1 und ein Erfassungssystem gemäß Anspruch 8. Vorteilhafte Ausgestaltungen und Weiterbildungen der Erfindung sind Gegenstand der abhängigen Ansprüche.

Dabei werden mehrere Verfahrensschritte durchgeführt, nämlich ein Markieren von möglichen Oberflächenelementen in jeder zweidimensionalen Bildaufnahme mittels eines für die bestimmte Art von Oberflächenelementen trainierten Detektors, ein Transferieren der Markierungsergebnisse jeder zweidimensionalen Bildaufnahme in das dreidimensionale Modell der Objektoberfläche und ein Auswerten der transferierten Markierungsergebnisse im dreidimensionalen Raum anhand zumindest eines festgelegten Abgleichkriteriums, um Oberflächenelemente zu lokalisieren.

Somit erfolgt die Erfassung von Oberflächenelementen in zweidimensionalen Bildern in einfacher Weise unter Zuhilfenahme der dreidimensionalen Information aus dem Modell der Objektoberfläche. Das dreidimensionale Modell der Objektoberfläche wird genutzt, um die in den zweidimensionalen Bildern detektierten Oberflächenelemente in den dreidimensionalen Raum zu transferieren. Einerseits werden dadurch falsche Markierungen aufgrund der redundanten Detektionen in mehreren Bilder unter Einbeziehung der dreidimensionalen Information zuverlässig erkannt und aussortiert. Andererseits gehen richtige Oberflächenelemente nicht verloren, auch wenn die Detektion in einzelnen Bildern fehlschlägt. Solche Elemente werden nämlich mittels einer anderen Bildaufnahme unter Einbeziehung der dreidimensionalen Information erkannt und im Auswertungsschritt bestätigt. Deshalb sind beim verwendeten Detektor die Anforderungen hinsichtlich der Erkennung invarianter Elemente geringer als bei herkömmlichen Verfahren, bei denen aufwendige und besonders optimierte Detektionsalgorithmen zum Einsatz kommen.

Vereinfacht ausgedrückt umfasst das vorgestellte Verfahren redundante Detektionen und eine nachträgliche Bewertung zur Filterung dieser Detektionen unter Einbeziehung der 3D-Information. Dieser Ablauf ist unabhängig von der Methode zur Detektion eines Oberflächenelements aus zweidimensionalen Bildern.

Von Vorteil ist es, wenn die Auswertung der transferierten Markierungsergebnisse im dreidimensionalen Raum anhand mehrerer kombinierter Abgleichkriterien durchgeführt wird. Die Daten im dreidimensionalen Raum werden dann auf unterschiedliche Weise miteinander verglichen, wodurch das Verfahren insgesamt robuster und zuverlässiger ist.

Als vorteilhaftes Abgleichkriterium wird die Häufigkeit transferierter Markierungsergebnisse in einem bestimmten Positionsbereich im dreidimensionalen Raum herangezogen. Bei diesem quantitativen Abgleichkriterium stellt ein entsprechender Abgleichalgorithmus keine hohen Anforderungen an einen Prozessor, sodass das Verfahren in kurzer Zeit Ergebnisse liefert.

Sinnvoll ist auch ein qualitativer Abgleich, wobei zunächst für jede Markierung ein Qualitätsmaß ermittelt wird und wobei als Abgleichkriterium die Qualitätsmaße der transferierten Markierungsergebnisse in einem bestimmten Positionsbereich im dreidimensionalen Raum herangezogen werden. Dabei wird ein Detektor genutzt, der im Zuge einer Detektion ein Qualitätsmaß bzw. Konfidenzmaß zur Angabe der Treffsicherheit liefert.

Vorteilhaft ist es zudem, wenn als Abgleichkriterium die Anzahl transferierter Markierungsergebnisse in einem bestimmten Positionsbereich im dreidimensionalen Raum herangezogen wird. Durch die Nutzung der 3D-Information ist eine besonders zuverlässige Auswertung möglich.

Ein anderes vorteilhaftes Abgleichkriterium ist ein im dreidimensionalen Modell der Objektoberfläche erkanntes Muster. Dabei wird ermittelt, ob sich eine markierte Position eines Oberflächenobjekts in ein solches Muster einbetten lässt. Insbesondere für Gebäudefassaden ist dieses Abgleichkriterium sinnvoll, weil dort regelmäßige Strukturen vorherrschen.

In vielen Anwendungsfällen kann es zudem hilfreich sein, wenn als Abgleichkriterium zumindest ein für die bestimmte Art von Oberflächenelementen vorgegebenes Plausibilitätskriterium ausgewertet wird. Viele Objektoberflächen weisen Eigenschaften auf, die von bestimmten Oberflächenelementen erfüllt werden müssen. Das betrifft beispielsweise die Position eines Elements im Verhältnis zu einer festgelegten Bezugsebene. Falls eine markierte Position diesem Plausibilitätskriterium widerspricht, wird im Auswertungsschritt kein entsprechendes Oberflächenelement bestätigt.

In einer vorteilhaften Ausprägung werden als Oberflächenelemente Fenster und/oder Türen eines Gebäudes erfasst. Damit gestaltet sich die digitale Nachbildung urbaner Räume besonders einfach.

Ein erfindungsgemäßes Erfassungssystem zeichnet sich dadurch aus, dass es einen Speicher und eine Auswerteeinrichtung umfasst und zur Durchführung eines oben angegebenen Verfahrens eingerichtet ist. An die Auswerteeinrichtung werden keine hohen Anforderungen gestellt, weil der Datenabgleich mit einfachen Algorithmen durchführbar ist.

Dabei ist es günstig, wenn die Auswerteeinrichtung einen Prozessor umfasst, mit dem ein für die bestimmte Art von Oberflächenelementen trainierter Detektionsalgorithmus ausführbar ist. Die Auswerteeinrichtung ist dann für alle Verfahrensschritte in einfacher Weise nutzbar.

Die Erfindung wird nachfolgend in beispielhafter Weise unter Bezugnahme auf die beigefügten Figuren erläutert. Es zeigen in schematischer Darstellung:
- Fig. 1: Objektoberfläche, von der aus zwei verschiedenen Blickrichtungen Bilder aufgenommen werden
- Fig. 2: erste zweidimensionale Bildaufnahme mit markierten möglichen Oberflächenelementen
- Fig. 3: zweite zweidimensionale Bildaufnahme mit markierten möglichen Oberflächenelementen
- Fig. 4: digitales dreidimensionales Modell der Objektoberfläche mit transferierten Markierungsergebnissen
- Fig. 5: digitalisierte Objektoberfläche mit lokalisierten Oberflächenelementen

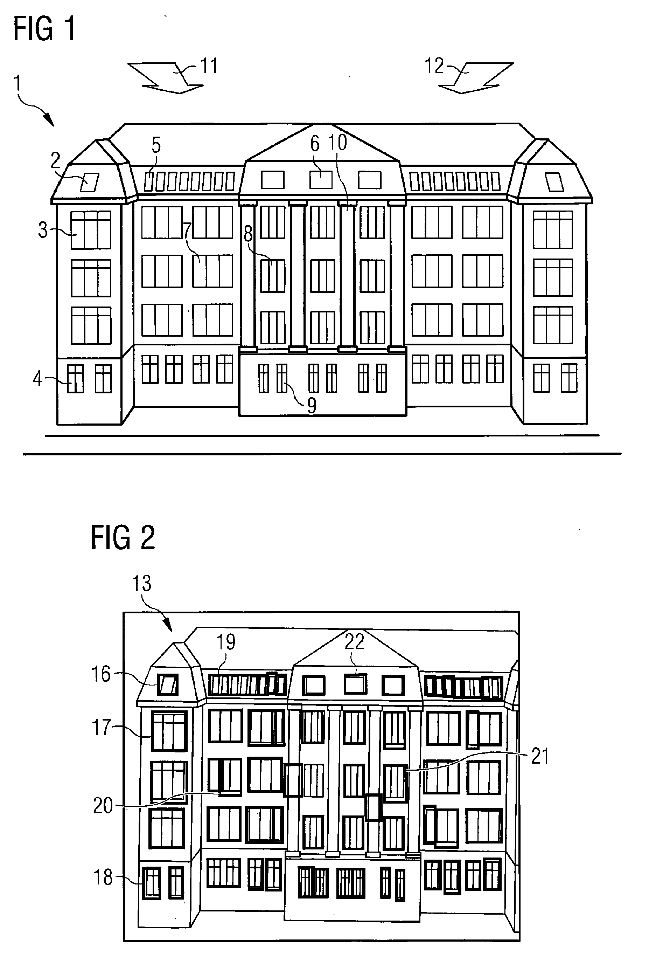

Die in Fig. 1 als Objektoberfläche 1 dargestellte Gebäudefassade weist als bestimmte Art von Oberflächenelementen 2-9 eine Vielzahl von verschiedenen Fenstertypen, -größen und -formen auf. Auch die Fensterfarbe kommt als Klassifizierungsmerkmal für das vorliegende Verfahren in Betracht. Zudem gibt es weitere Oberflächenelemente 10, beispielsweise Säulen, die nicht erfasst werden sollen. Der Übersichtlichkeit halber sind in den Figuren nur einzelne Oberflächenelemente und Markierungen mit Bezugszeichen versehen.

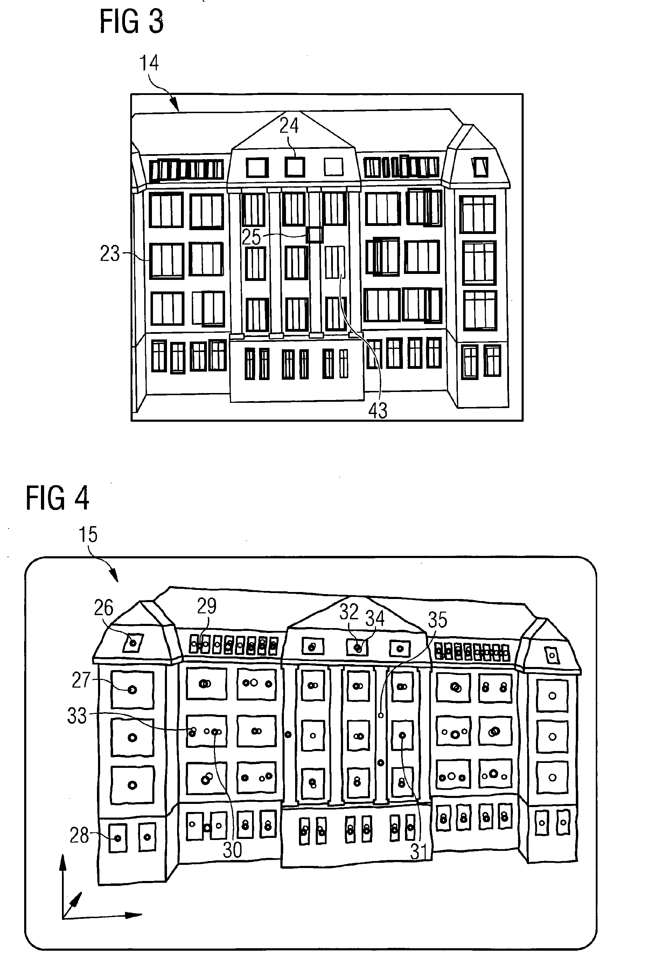

Mit zwei Pfeilen 11, 12, sind Blickrichtungen angegeben, aus denen die Objektoberfläche 1 abgebildet wird. Daraus resultieren zumindest zwei verschiedene zweidimensionale Bildaufnahmen 13, 14. Diese werden beispielsweise genutzt, um mit einem sogenannten "Structure from Motion" Verfahren ein digitales dreidimensionales Modell 15 der Objektoberfläche 1 zu erstellen. Dabei geht semantische Information über den Bildinhalt verloren. Fig. 4 zeigt das Ergebnis mit bereits transferierten Markierungsergebnissen 26-35.

Die digitalen zweidimensionalen Bildaufnahmen 13, 14 und das digitale Modell 15 der Objektoberfläche 1 bilden die Ausgangsdaten für das vorliegende Verfahren. Diese sind beispielsweise in einem Speicher eines entsprechenden Erfassungssystems abgespeichert.

In einem ersten Verfahrensschritt werden mittels eines trainierten Detektors mögliche Oberflächenelemente digital markiert. Das geschieht für jede zweidimensionale Bildaufnahme 13, 14. Als jeweilige Markierungsergebnis 16-25 ist beispielsweise ein erkanntes Oberflächenelement mit einem Rechteck umrahmt.

Bei diesem Verfahrensschritt können auch mehrere Detektoren zum Einsatz kommen. Jeder Detektor wird unter Zuhilfenahme von Bildern, auf denen eine Vielzahl von verschiedenen Objektelementen der gewünschten Art (z.B. verschiedene Fenstertypen, -größen, -formen und -farben) abgebildet ist, trainiert. Dieser Vorgang ist in der Regel generisch und wird nicht für jede Objektoberfläche 1 erneut durchgeführt.

Dabei wird jeder Detektor hinreichend generalisiert trainiert, sodass Form und Größe der Oberflächenelemente 2-9 keine entscheidende Rolle spielen. Ein entsprechender Detektor ist beispielsweise aus P. Felzenszwalb et al., "Object Detection with Discriminatively Trained Part-Based Models", IEEE Trans. Pattern Analysis and Machine Intelligence, vol. 32, no. 9, pp. 1627-1645, Sep. 2010, bekannt.

Resultat dieses ersten Verfahrensschritts sind zumindest zwei Bildaufnahmen 13, 14, in denen mögliche Oberflächenelemente markiert sind. Die Verwendung unterschiedlicher Markierungen ermöglicht dabei eine Klassifizierung der Oberflächenelemente.

In einem nächsten Verfahrensschritt werden über die bekannte 2D-3D-Korrespondenz die Markierungsergebnisse 16-25 in das dreidimensionale Modell 15 der Objektoberfläche 1 transferiert. Als jeweiliges transferiertes Markierungsergebnis 26-35 ist beispielsweise ein 3D-Element im dreidimensionalen Modell 15 eingebettet. In Fig. 4 sind diese 3D-Elemente als Kreise dargestellt, wobei unterschiedliche Durchmesser und Strichstärken unterschiedliche Oberflächenelemente 2-10 kennzeichnen. Diese Kennzeichnung kann beispielsweise auch mittels unterschiedlicher Farbpunkte erfolgen.

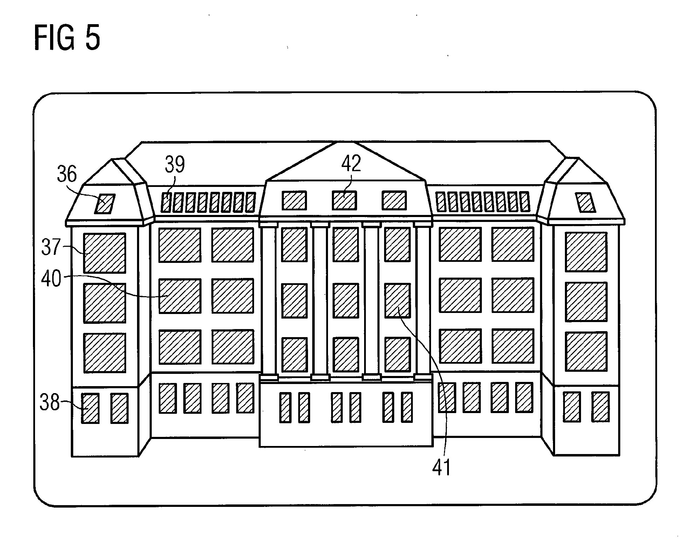

Anhand der transferierten Markierungsergebnisse 26-35 im dreidimensionalen Modell 15 erfolgt im nächsten Verfahrensschritt eine Auswertung, um aus den markierten möglichen Oberflächenelementen jene herauszufiltern, die tatsächlich in der Objektoberfläche 1 vorhanden sind. Ergebnis ist eine Lokalisierung dieser vorhandenen Oberflächenelemente 36-42 im dreidimensionalen Raum, wie in Fig. 5 dargestellt.

In einer vorteilhaften Ausprägung wird aus der Häufigkeit transferierter Markierungsergebnisse 32, 34 an einer Stelle im dreidimensionalen Modell 15 auf das Vorhandensein eines Oberflächenelements 6, 42 geschlossen. Ausgehend von der lokalen Häufigkeit transferierter Markierungsergebnisse 32, 34 aus verschiedenen Bildaufnahmen 13, 14 wird zum Beispiel im Auswertungsschritt nur ein solches Oberflächenobjekt 42 bestätigt, das ausreichend häufig markierte wurden. Zu diesem Zweck wird für die Häufigkeit ein Grenzwert vorgegeben. Bei einem Gebäude ist beispielsweise die Lage einer möglichen Fensterlaibung anhand des dreidimensionalen Modells 15 bestimmbar. Damit ist ein Positionsbereich vorgegeben, in dem sich transferierte Markierungsergebnisse 32, 34 befinden müssen, damit das Vorhandensein eines Fensters bestätigt wird.

Eine qualitative Auswertung der Markierungsergebnisse 16-25 setzt einen Detektor voraus, der jede Detektion mit einem Qualitätsmaß gewichtet. Dieses Qualitätsmaß gibt Auskunft darüber, mit welcher Sicherheit ein mittels des Detektors markiertes Oberflächenelement 6 tatsächlich vorhanden ist. Zum Beispiel werden die Qualitätsmaße der transferierten Markierungsergebnisse 32, 34 in einem bestimmten Positionsbereich abgeglichen, indem ein durchschnittliches Qualitätsmaß gebildet wird. Auch eine einfache Addition der entsprechenden Qualitätsmaße liefert Abgleichergebnisse. Ein Oberflächenelement 42 wird beispielsweise bestätigt, wenn das durchschnittliche oder summierte Qualitätsmaß einen Grenzwert übersteigt.

Alternativ dazu oder zusätzlich werden bestimmte Regelmäßigkeiten ausgewertet. Dabei wird festgestellt, wie gut sich die erkannte Position eines transferierten Markierungsergebnisses 26-35 in ein allgemein gültiges, regelmäßig auftretendes Muster einfügt. Zur Bestimmung eines Musters kann sowohl die Lage als auch die Ausrichtung einzelner Oberflächenelemente herangezogen werden. Das gilt zum Beispiel für Fenster, die innerhalb einer Fassade regelmäßig angeordnet sind.

Dieses Abgleichkriterium ist auch dazu geeignet, ein in einzelnen Bildaufnahmen 13, 14 nicht erkanntes mögliches Oberflächenelemente 43 während des Auswertungsschritts als tatsächlich vorhandenes Oberflächenelement 41 zu klassifizieren.

Als weiteres Abgleichkriterium im Auswertungsschritt gilt die Plausibilität einer erkannten Position eines transferierten Markierungsergebnisses 26-35 in Bezug auf das dreidimensionale Modell 15. Beispielsweise sind Fester immer in die Objektoberfläche 1 integriert und können nicht in der Luft schweben. Auf diese Weise werden fehlerhaft erkannte Oberflächenelemente 25 und die entsprechenden transferierten Markierungsergebnisse 35 erkannt und ausgesondert.

Zusätzlich besteht die Möglichkeit, nur die übereinstimmenden Markierungen in den einzelnen zweidimensionalen Bildaufnahmen 13, 14 auszuwerten, ohne Zuhilfenahme der 3D-Information. Eine solche Auswertung ist einfach durchzuführen und liefert rasch Ergebnisse, die mittels weiterer Abgleichkriterien verifizierbar sind.

Zur Durchführung des Verfahrens ist ein Erfassungssystem nutzbar, das eine entsprechend eingerichtete Auswerteeinrichtung umfasst. Beispielsweise handelt es sich dabei um einen Computer mit einem Speichermedium. Auf diesem sind digitale Bildaufnahmen 13, 14 und ein digitales dreidimensionales Modell 15 der Objektoberfläche 1 abgespeichert. Optional ist eine Kamera vorhanden, um gegebenenfalls weitere Bilder der Objektoberfläche 1 aufzunehmen. Die Markierung von möglichen Oberflächenelementen erfolgt mittels eines Detektionsalgorithmus, welcher in einem Prozessor ausgeführt wird. Dazu werden die Daten der zweidimensionalen Bildaufnahmen in einen Arbeitsspeicher geladen und mittels Prozessor verarbeitet. Anhand der bekannten 2D-3D-Korrespondenz erfolgt anschließend eine Überführung der Markierungsdaten in das ebenfalls in den Arbeitsspeicher geladene dreidimensionale Modell 15. Entsprechende Algorithmen sind bekannt und werden im Prozessor ausgeführt.

Im nächsten Verfahrensschritt folgt die Auswertung der transferierten Markierungsergebnisse 26-35 mittels der genannten Abgleichkriterien. Konkret wird ein entsprechender Auswertealgorithmus im Prozessor ausgeführt. Als Ergebnis des Verfahrens liegt eine digitale Darstellung der Objektoberfläche 1 mit den erkannten Oberflächenelementen 36-42 vor. Im Fall von Gebäudefassaden kann auch die Gesamtfläche der erkannten Oberflächenelemente 36-42 ausgegeben werden, z.B. als Planungsgrundlage für eine Fensterreinigung.

Das Verfahren ist in vielseitiger Weise einsetzbar und nicht nur auf Gebäude oder Stadtansichten beschränkt. Andere Anwendungsfälle sind Oberflächenanalysen in der Industrie oder in der Forschung.

## Patentansprüche

1. Verfahren zur Erfassung einer bestimmten Art von Oberflächenelementen (2-9) einer Objektoberfläche (1), insbesondere einer Gebäudeoberfläche, wobei verschiedene zweidimensionale Bildaufnahmen (13, 14) der Objektoberfläche (1) in digitaler Form und ein digitales dreidimensionales Modell (15) der Objektoberfläche (1) vorhanden sind, **dadurch gekennzeichnet, dass** folgende Verfahrensschritten durchgeführt werden:
- Markieren von möglichen Oberflächenelementen in jeder zweidimensionalen Bildaufnahme (13, 14) mittels eines für die bestimmte Art von Oberflächenelementen (2-9) trainierten Detektors,
- Transferieren der Markierungsergebnisse (16-25) jeder zweidimensionalen Bildaufnahme (13, 14) in das dreidimensionale Modell (15) der Objektoberfläche (1),
- Auswerten der transferierten Markierungsergebnisse (26-35) im dreidimensionalen Raum anhand zumindest eines festgelegten Abgleichkriteriums, um Oberflächenelemente (36-41) zu lokalisieren.

2. Verfahren nach Anspruch 1, **dadurch gekennzeichnet, dass** die Auswertung der transferierten Markierungsergebnisse (26-35) im dreidimensionalen Raum anhand mehrerer kombinierter Abgleichkriterien durchgeführt wird.

3. Verfahren nach Anspruch 1 oder 2, **dadurch gekennzeichnet, dass** als Abgleichkriterium die Häufigkeit transferierter Markierungsergebnisse (26-35) in einem bestimmten Positionsbereich im dreidimensionalen Raum herangezogen wird.

4. Verfahren nach Anspruch 1 bis 3, **dadurch gekennzeichnet, dass** für jede Markierung ein Qualitätsmaß ermittelt wird und dass als Abgleichkriterium die Qualitätsmaße der transferierten Markierungsergebnisse (26-35) in einem bestimmten Positionsbereich im dreidimensionalen Raum herangezogen werden.

5. Verfahren nach einem der Ansprüche 1 bis 4, **dadurch gekennzeichnet, dass** als Abgleichkriterium ein im dreidimensionalen Modell (15) der Objektoberfläche (1) erkanntes Muster herangezogen wird.

6. Verfahren nach einem der Ansprüche 1 bis 5, **dadurch gekennzeichnet, dass** als Abgleichkriterium zumindest ein für die bestimmte Art von Oberflächenelementen (2-9) vorgegebenes Plausibilitätskriterium ausgewertet wird.

7. Verfahren nach einem der Ansprüche 1 bis 6, **dadurch gekennzeichnet, dass** als Oberflächenelemente (2-9) Fenster und/oder Türen eines Gebäudes erfasst werden.

8. Erfassungssystem für eine bestimmte Art von Oberflächenelementen (2-9) einer Objektoberfläche (1), insbesondere einer Gebäudeoberfläche, **dadurch gekennzeichnet, dass** das Erfassungssystem einen Speicher und eine Auswerteeinrichtung umfasst und zur Durchführung eines Verfahrens nach einem der Ansprüche 1 bis 7 eingerichtet ist.

9. Erfassungssystem nach Anspruch 8, **dadurch gekennzeichnet, dass** die Auswerteeinrichtung einen Prozessor umfasst, mit dem ein für die bestimmte Art von Oberflächenelementen (2-9) trainierter Detektionsalgorithmus ausführbar ist.
